(19) **Europäisches Patentamt / European Patent Office / Office européen des brevets**

(11) **EP 3 659 969 A1**

(12) # EUROPEAN PATENT APPLICATION
published in accordance with Art. 153(4) EPC

(43) Date of publication:
**03.06.2020 Bulletin 2020/23**

(21) Application number: **18838976.1**

(22) Date of filing: **23.07.2018**

(51) Int Cl.:
**C01F 11/18** [(2006.01)]  **A23L 2/38** [(2006.01)]
**A23L 2/52** [(2006.01)]  **A23L 17/00** [(2016.01)]
**A23L 33/16** [(2016.01)]

(86) International application number:
**PCT/JP2018/027450**

(87) International publication number:
**WO 2019/021989 (31.01.2019 Gazette 2019/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.07.2017 JP 2017145424**

(71) Applicant: **Shiraishi Kogyo Kaisha, Ltd.**
**Osaka-shi**
**Osaka 541-0041 (JP)**

(72) Inventors:
• **NAKAI, Shinsuke**
 **Osaka-shi**
 **Osaka 530-0005 (JP)**

• **KUMA, Yoshiki**
 **Amagasaki-shi**
 **Hyogo 660-0085 (JP)**
• **TANAKA, Yukari**
 **Amagasaki-shi**
 **Hyogo 660-0085 (JP)**
• **CHIBA, Ryo**
 **Amagasaki-shi**
 **Hyogo 660-0085 (JP)**

(74) Representative: **Ter Meer Steinmeister & Partner**
**Patentanwälte mbB**
**Nymphenburger Straße 4**
**80335 München (DE)**

(54) **CALCIUM CARBONATE, CALCIUM CARBONATE PREPARATION FOR FOOD ADDITION USE, AND FOOD**

(57) Calcium carbonate and a calcium carbonate preparation for food addition use which hardly sediment and are excellent in dispersibility when they are added to foods such as beverages, and which can impart good springiness to fish paste products when they are added to such products; and a food are provided. The calcium carbonate is characterized by having a BET specific surface area in the range of 20 to 45 m²/g, and a volume of voids having a void size of 0.1 μm or less of 30% or more of the whole volume of voids in a pore size distribution curve (0.01 to 10 μm) by mercury porosimetry.

EP 3 659 969 A1

**Description**

Technical Field

The present invention relates to calcium carbonate, a calcium carbonate preparation for food addition use, and a food.

Background Art

It is known to add calcium carbonate to foods such as beverages for purposes such as calcium fortification (Patent Literature 1). It is known to add calcium carbonate to fish paste products such as boiled fish paste, tubular rolls of boiled fish paste, and deep-fried patties of fish paste for purposes such as calcium fortification and quality improvement (Patent Literature 2).

Citation List

Patent Literature

Patent Literature 1: Japanese Patent Laid-Open No. 10-528630
Patent Literature 2: Japanese Patent Laid-Open No. 6-220238

Summary of Invention

Technical Problem

As calcium carbonate added to foods such as beverages, calcium carbonate which hardly sediments and is excellent in dispersibility is desired. As calcium carbonate added to fish paste products, calcium carbonate which can impart good springiness to the products is desired.
An object of the present invention is to provide calcium carbonate and a calcium carbonate preparation for food addition use which hardly sediment and are excellent in dispersibility when they are added to foods such as beverages, and which can impart good springiness to fish paste products when they are added to such a products; and a food.

Solution to Problem

Calcium carbonate of the present invention is characterized by having a BET specific surface area in the range of 20 to 45 $m^2/g$, and a volume of voids having a void size of 0.1 $\mu$m or less being 30% or more based on the whole volume of voids in a pore size distribution curve (0.01 to 10 $\mu$m) by mercury porosimetry.
A calcium carbonate preparation for food addition use of the present invention is characterized by comprising: the above-mentioned calcium carbonate of the present invention; and an emulsifier.
In the calcium carbonate preparation for food addition use of the present invention, the emulsifier is preferably included in an amount of 1 to 60 parts by mass per 100 parts by mass of the calcium carbonate.
In the calcium carbonate preparation for food addition use of the present invention, the emulsifier is preferably at least one selected from sucrose fatty acid esters, polyglycerin fatty acid esters, sodium carboxymethylcellulose, methylcellulose, propylene glycol alginate, water-soluble soybean polysaccharides, gum arabic, arabinogalactan, lecithin and modified starch.
The calcium carbonate preparation for food addition use of the present invention may be obtained by drying an aqueous suspension comprising the calcium carbonate and the emulsifier.
A food of the present invention is characterized by comprising: the above-mentioned calcium carbonate of the present invention. Examples of the food include milk beverages and fish paste products.
As mentioned above, the calcium carbonate of the present invention can be used as calcium carbonate for foods added to foods including, but not limited to, beverages and fish paste products. The calcium carbonate can be added to and used for, for example, powdered products, drugs, and quasi drugs. Also in this case, the calcium carbonate of the present invention exhibits good dispersibility.

Advantageous Effects of Invention

According to the present invention, the calcium carbonate hardly sediments and is excellent in dispersibility when the calcium carbonate is added to foods such as beverages, and can impart good springiness to fish paste products when the calcium carbonate is added to such products. The calcium carbonate of the present invention also exhibits good dispersibility in uses besides these uses.

Description of Embodiments

Preferred embodiments will be described hereinafter. However, the following embodiments are mere illustrative, and the present invention is not limited to the following embodiments.

(Calcium carbonate)

The BET specific surface area of calcium carbonate in the present invention is in the range of 20 to 45 $m^2/g$, preferably in the range of 25 to 40 $m^2/g$, and preferably in the range of 30 to 40 $m^2/g$. When the BET specific surface area is too small, the calcium carbonate may not be able to exhibit enough dispersibility, and may precipitate in a beverage or the like, and enough springiness may not be obtained in the case where the calcium carbonate is added to a fish paste product. When the BET specific surface area is too large, particles easily aggregate, and the solid content may decrease to thereby decrease the productivity in the case where preparation slurry is prepared. The dispersion may deteriorate in a beverage, a fish paste product or the like.

In the calcium carbonate in the present invention, the volume of voids having a void size of 0.1 $\mu$m or less is 30% or more based on the whole volume of voids in the pore size distribution curve (0.01 to 10 $\mu$m) by mercury porosimetry. Due to this, the calcium carbonate is excellent in dispersibility thereby when the calcium carbonate is added to a food such as a beverage. Therefore, the calcium carbonate hardly sediments in a beverage or the like. When the calcium carbonate is added to a fish paste product, good springiness can be imparted. The void volume having a void size of 0.1 $\mu$m or less is preferably 30% to 50%, and more preferably 35% to 45% based on the whole volume of voids.

Specific examples of the calcium carbonate include synthetic calcium carbonate and natural calcium carbonate (heavy calcium carbonate). The calcium carbonate is preferably synthetic calcium carbonate.

Examples of synthetic calcium carbonate include sedimentary (colloidal) calcium carbonate and light calcium carbonate. Synthetic calcium carbonate can be produced, for example, by reacting calcium hydroxide with carbonic acid gas. Calcium hydroxide can be produced, for example, by reacting calcium oxide with water. Calcium oxide can be produced, for example, by subjecting limestone ore to multi-fuel firing with coke and the like. In this case, since carbonic acid gas is generated at the time of firing, calcium carbonate can be produced by reacting this carbonic acid gas with calcium hydroxide.

Examples of a method for producing the calcium carbonate having the above-mentioned BET specific surface area and the above-mentioned volume of voids include the following method. In the following production method, the carbonation rate is represented by the expression: carbonation rate (%) = 100 $\times$ W / (W + W1), wherein W is the mass of the calcium carbonate in a reaction liquid, and W1 is the mass of calcium hydroxide in a reaction liquid.

In this production method, an aqueous calcium hydroxide suspension is carbonated in a first carbonation step and then carbonated in a second carbonation step to produce the calcium carbonate.

As the first carbonation step, for example, gas containing carbonic acid gas at a carbonic acid gas concentration of 25% by volume or more, preferably 25 to 40% by volume, is blown into an aqueous calcium hydroxide suspension at a temperature of 14 to 18°C at 13 to 16 liters/min per kg of calcium hydroxide to perform a carbonation reaction until the carbonation rate is around 98%.

As the second carbonation step, for example, to the aqueous suspension after the first carbonation step, an aqueous calcium hydroxide suspension is added in an amount of 8 to 15 parts by mass per 100 parts by mass of calcium hydroxide at the start of the first carbonation step, and gas containing carbonic acid gas at a carbonic acid gas concentration of 25% by volume or more, preferably 25 to 40% by volume, is blown into the aqueous calcium hydroxide suspension at 35 to 45 liters/min per kg of calcium hydroxide to perform a carbonation reaction until the pH reaches 7.0 or less. The second carbonation step is repeated once or more, and may usually be repeated around 1 to 3 times. When the second carbonation step is repeated a plurality of times, a carbonation reaction may be performed in the last carbonation step until the pH of the aqueous suspension reaches 7.0 or less. The temperature condition of the aqueous calcium hydroxide suspension added in the second carbonation step are not particularly limited. For example, when the aqueous suspension immediately after the first carbonation step is usually at around 30 to 50°C by heat of reaction, the temperature may remain such a temperature.

The calcium carbonate obtained by these methods may be collected and dried according to a usual method. For example, the aqueous suspension after all the reactions is subjected to press dehydration, and the obtained paste can also be used as it is. This may be dried and cracked, and the obtained powder can be also used. The structure of the calcium carbonate is not substantially destroyed by drying, cracking or the like.

In the above-mentioned production method, the BET specific surface area of the calcium carbonate can be adjusted by changing the temperature of the aqueous calcium hydroxide suspension and/or the rate at which gas containing carbonic acid gas is blown into the suspension in the first carbonation step. To increase the BET specific surface area, the temperature of the aqueous calcium hydroxide suspension is reduced, or the rate at which gas containing carbonic acid gas is blown into the suspension is increased. To reduce the BET specific surface area, the temperature of the aqueous calcium hydroxide suspension is increased, or the rate at which gas containing carbonic acid gas is blown into the suspension is reduced.

In the above-mentioned production method, the volume of voids of the calcium carbonate can be adjusting by changing the amount of the calcium hydroxide added and/or the number of times of adding the calcium hydroxide in the second carbonation step. To increase the volume of voids, the amount of calcium hydroxide added is increased, or the number of times of adding calcium hydroxide is increased in the second carbonation step. To reduce the volume of voids, the amount of calcium hydroxide added is reduced, or the number of times of adding calcium hydroxide is reduced in the second carbonation step.

(Method for producing calcium carbonate preparation for food additives)

A calcium carbonate preparation for food additives of the present invention is produced by various methods.

For example, the calcium carbonate preparation for food additives of the present invention can be produced by adding calcium carbonate powder, a sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, or modified starch, and the other additives if needed to water and subjecting the obtained aqueous suspension to wet grinding.

The calcium carbonate preparation for food additives of the present invention may be produced by adding a sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, or modified starch, and the other additives if needed to an aqueous suspension of the calcium carbonate, and subjecting the obtained aqueous suspension to wet grinding.

The calcium carbonate preparation for food additives of the present invention may be produced by subjecting an aqueous suspension of the calcium carbonate to wet grinding, adding thereto a sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, or modified starch, and the other additives if needed, and mixing the resultant.

As a method of preparing an aqueous suspension of the calcium carbonate, known methods can be widely adopted. For example, the calcium carbonate is added to water, and the mixture is stirred. Next, the aqueous suspension of the calcium carbonate is preferably subjected to wet grinding treatment. The wet grinding treatment can be performed using a conventionally known wet grinder or wet crusher. Examples of such a wet grinder or such a wet crusher include a colloid mill, a bead mill, a sand mill, a ball mill and a wet jet mill.

A sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, modified starch, and the other additives can be added to and mixed with the aqueous suspension of the calcium carbonate before or after wet grinding treatment. The order of adding them is not limited.

A sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, modified starch, and the other additives may be added simultaneously or sequentially.

Any of a sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, modified starch, and the other additives may be added before wet grinding treatment while the others may be added after wet grinding treatment.

The calcium carbonate preparation for food additives of the present invention may be a preparation obtained by drying and powdering the aqueous suspension containing the calcium carbonate produced as mentioned above and the emulsifier. The suspension may be dried and then powdered, or may be dried and powdered simultaneously.

For drying and powdering, any of known dryers and powdering devices can be used widely. In the present invention, it is preferable to prevent especially the deterioration of a sucrose fatty acid ester, a polyglycerin fatty acid ester, carboxymethylcellulose sodium, methylcellulose, propylene glycol alginate, water-soluble soybean polysaccharides, gum arabic, arabinogalactan, lecithin, modified starch, and the other additives, etc. in the aqueous suspension by heat at the time of drying which leads to the loss of an resuspension effect and a stink due to scorching or the like. For this reason, the drying temperature is preferably controlled so as not to exceed 120°C.

As a drying and powdering device which enables such control, flash dryers are known, and it is preferable to use a flash dryer as a drying and powdering device in the present invention. Examples of such flash dryer include a spray dryer, a flash jet dryer, a micron dryer and a slurry dryer. A powerful distribution flash dryer commercially available under the name of Drymeister can also be used.

At the time of drying and powdering, drying conditions of the drying and powdering device are adjusted so that the amount of water remaining in the obtained calcium carbonate dry composition for food additives is preferably in the range of 0.2 to 5% by mass, further preferably in the range of 0.2 to 3% by mass. When the amount of remaining water is adjusted to the above-mentioned range, resuspension is easy in the case of preparing an aqueous suspension from the calcium carbonate dry composition for food additives of the present invention again, and the aqueous resuspension having almost the same dispersibility and suspension stability as the aqueous calcium carbonate suspension before drying can be prepared.

(Method for manufacturing fish paste product)

In a method for manufacturing a fish paste product using the calcium carbonate of the present invention, it is preferable that the calcium carbonate be added to ground fish meat, the pH be adjusted to 7.0 to 8.0, and then the ground fish meat to which the calcium carbonate is added be formed and heated. When the value of the pH is too low, the effect of calcium ions may not be able to be obtained enough. When the value of the pH is too high, the strength of the ground fish meat may deteriorate.

Known components such as starch, common salt, sugars, seasonings, oils and fats, and coloring agents besides ground fish meat used as a raw material can be added to a fish paste product. Examples of the fish paste product include boiled fish paste, deep-fried patties of fish paste, tubular rolls of boiled fish paste, light puffy cakes made of ground fish meat, and fish sausages. However, the fish paste product of the present invention is not limited thereto.

In the method for manufacturing a fish paste product of the present invention, ground fish meat to which the calcium carbonate is added is formed into the shape of a fish paste product and then heated. The heating temperature is not particularly limited, and is suitably determined depending on the raw material and the fish paste product which is an end product.

The calcium carbonate of the present invention can impart enough springiness to ground fish meat by the effects of fine calcium carbonate particles, voids formed thereby, and calcium ions contained in the calcium carbonate.

Examples

The present invention will be described by Examples more specifically hereinafter. The present invention is not limited to the following Examples.

<Examination of influence of BET specific surface area>

(Synthesis of calcium carbonate)

(Example 1)

A reaction vessel was charged with 1000 kg of an aqueous calcium hydroxide suspension adjusted to a concentration of 7.5% by mass and a temperature of 16°C, carbonic acid gas at a concentration of 35% by volume was blown into this at a flow rate of 14 liters/minute per kg of calcium hydroxide, and the suspension was carbonated until the carbonation rate was 98%. Subsequently, 100 kg of an aqueous calcium hydroxide suspension adjusted to a concentration of 7.5% by mass was added, carbonic acid gas at a concentration 30% by volume was blown at a flow rate of 42 liters/minute per kg of calcium hydroxide, and the suspension was carbonated until the pH reached 7.0 or less. Mother liquid was separated from the obtained calcium carbonate with a press dehydrator, and the calcium carbonate was then dried and pulverized to obtain about 111 kg of calcium carbonate of the present invention. The BET specific surface area of the obtained calcium carbonate was 33 m$^2$/g, and the ratio between the volume of voids having a void size of 0.1 $\mu$m or less and the whole volume of voids was 37%.

The BET specific surface area was determined by the BET method using nitrogen gas.

The ratio of the volume of voids having a void size of 0.1 $\mu$m or less was determined by calculating the ratio between the void volume having a void size of 0.1 $\mu$m or less and the whole volume of voids in the pore size distribution curve (0.01 to 10 $\mu$m) using a porosimeter by mercury porosimetry.

(Example 2)

Calcium carbonate was produced in the same way as in Example 1 except that the initial temperature of calcium hydroxide was 18°C, and that a step of adding calcium hydroxide was repeated twice. The BET specific surface area of the obtained calcium carbonate was 25 m$^2$/g, and the ratio between the volume of voids having a void size of 0.1 $\mu$m or less and the whole volume of voids was 35%.

(Example 3)

Calcium carbonate was produced in the same way as in Example 1 except that the initial temperature of calcium hydroxide was 14°C. The BET specific surface area of the obtained calcium carbonate was 38 m$^2$/g, and the ratio between the volume of voids having a void size of 0.1 $\mu$m or less and the whole volume of voids was 40%.

(Comparative Example 1)

Calcium carbonate was produced in the same way as in Example 1 except that the initial temperature of calcium hydroxide was 20°C. The BET specific surface area of the obtained calcium carbonate was 16 m$^2$/g, and the ratio between the volume of voids having a void size of 0.1 $\mu$m or less and the whole volume of voids was 35%.

(Comparative Example 2)

Calcium carbonate was produced in the same way as in Example 1 except that the initial temperature of calcium hydroxide was 10°C. The BET specific surface area of the obtained calcium carbonate was 47 m$^2$/g, and the ratio between the volume of voids having a void size of 0.1 $\mu$m or less and the whole volume of voids was 32%.

(Preparation of calcium carbonate preparation for food additives and evaluation as milk beverage)

An aqueous calcium carbonate suspension at a concentration of 30% by mass was prepared using any of the calcium carbonate obtained in each of Examples 1 to 3 and Comparative Examples 1 and 2. Gum arabic was added to and mixed with this aqueous calcium carbonate suspension such that the content of the gum arabic was 5 parts by mass per 100 parts by mass of calcium carbonate. The obtained aqueous suspension was subjected to wet grinding to prepare a calcium carbonate preparation for food additives.
Water, powdered skim milk, and cream were mixed with the obtained calcium carbonate preparation for food additives, and the mixture was emulsified with a high pressure homogenizer and then sterilized to prepare a milk beverage. The milk beverage contained 0.3% by mass of the aqueous calcium carbonate suspension, 87.6% by mass of the water, 9.5% by mass of the powdered skim milk, and 2.6% by mass of the cream.
The dispersibility of the obtained milk beverage was measured as follows.
(Dispersibility) The prepared milk beverage was poured into two milk bottles (180 g), left to stand and kept in a refrigerator. The milk bottles were opened 7 days after standing, the milk bottles were leaned gently, and the liquid component was discarded. The milk bottles were upside down, the bottoms of the milk bottles were photographed immediately and 5 minutes later, and the states thereof were evaluated according to the following scale by visual observation. The evaluation results are shown in Table 1.
1: The dispersibility is good (almost no precipitate remains on the bottoms of the bottles).
2: The dispersibility is slightly good (slight precipitate remains on the bottoms of the bottles circularly).
3: The dispersibility is normal (precipitate remains on the bottoms of the bottles circularly).
4: The dispersibility is slightly inferior (precipitate remains on the full bottoms of the bottles).
5: The dispersibility is inferior (precipitate remains on the full bottoms of the bottles, and also hangs to the side).

[Table 1]

| Calcium carbonate | Comparative Example 1 | Example 2 | Example 1 | Example 3 | Comparative Example 2 |
|---|---|---|---|---|---|
| BET specific surface area (m$^2$/g) | 16 | 25 | 33 | 38 | 47 |

(continued)

| Calcium carbonate | Comparative Example 1 | Example 2 | Example 1 | Example 3 | Comparative Example 2 |
|---|---|---|---|---|---|
| Volume of voids having 0.1 $\mu$m or less (%) | 35 | 35 | 37 | 40 | 32 |
| Dispersibility | 5 | 2 | 2 | 1 | 4 |

As shown in Table 1, it is found that the calcium carbonate preparations for food additives of Examples 1 to 3 according to the present invention have good dispersibility when the preparations are used for a milk beverage, and that therefore, the calcium carbonate preparations for food additives of the present invention hardly sediment and are excellent in dispersibility when the preparations are added to a milk beverage.

<Examination of influence of volume of voids>

(Synthesis of calcium carbonate)

(Example 4)

Calcium carbonate was produced in the same way as in Example 1 except that the amount of the aqueous calcium hydroxide suspension added was changed to 80 kg. The BET specific surface area of the obtained calcium carbonate was 30 m$^2$/g, and the ratio between the volume of voids having a void size of 0.1 $\mu$m or less and the whole volume of voids was 32%.

(Comparative Example 3)

A reaction vessel was charged with 1000 kg of an aqueous calcium hydroxide suspension adjusted to a concentration of 7.5% by mass and a temperature of 16°C, carbonic acid gas at a concentration of 35% by volume was blown into this at a flow rate of 14 liters/minute per 1 kg of calcium hydroxide, the suspension was carbonated until the pH reached 7.0 or less, and calcium carbonate was produced in the same way as in Example 1. The BET specific surface area of the obtained calcium carbonate was 30 m$^2$/g, and the ratio between the volume of voids having a void size of 0.1 $\mu$m or less and the whole volume of voids was 25%.

(Preparation of calcium carbonate preparation for food additives and evaluation as milk beverage)

As the calcium carbonate of Comparative Example 4, commercial calcium carbonate (brand name "Porecal", manufactured by Taiyo Kagaku Co., Ltd., BET specific surface area; 25 m$^2$/g, and the ratio between the volume of voids having a void size of 0.1 $\mu$m or less and the whole volume of voids; 18%) was used.
An aqueous calcium carbonate suspension at a concentration of 30% by mass was prepared using any of the calcium carbonate of each of Examples 1 and 4 and Comparative Examples 3 and 4. A polyglycerin fatty acid ester and a sucrose fatty acid ester were added to and mixed with this aqueous calcium carbonate suspension such that the content of the polyglycerin fatty acid ester was 3 parts by mass, and that the content of the sucrose fatty acid ester was 10 parts by mass per 100 parts by mass of calcium carbonate. The obtained aqueous suspension was subjected to wet grinding to prepare a calcium carbonate preparation for food additives. These were used for the milk beverage and evaluated in the same way as the above. The evaluation results are shown in Table 2.

[Table 2]

| Calcium carbonate | Comparative Example 4 | Comparative Example 3 | Example 4 | Example 1 |
|---|---|---|---|---|
| BET specific surface area (m$^2$/g) | 25 | 30 | 30 | 33 |
| Volume of voids having 0.1 $\mu$m or less (%) | 18 | 25 | 32 | 37 |
| Dispersibility | 4 | 5 | 2 | 2 |

As shown in Table 2, it is found that the calcium carbonate preparations for food additives of Examples 1 and 4 according to the present invention have good dispersibility when the preparations are used for a milk beverage, and that therefore, the calcium carbonate preparations for food additives of the present invention hardly sediment and are excellent in dispersibility when the preparations are added to a milk beverage.

(Evaluation as fish paste product)

The calcium carbonate of each of Examples 1 to 4 and Comparative Examples 1 to 4 was blended into ground fish meat to produce a fish paste product.

Specifically, 40 parts by mass of water, 1 part by mass of calcium carbonate, 3 parts by mass of common salt and 5 parts by mass of starch were added to 100 parts by mass of ground fish meat. In a blending method, frozen ground fish meat was subjected to rough grind with a food processer and then subjected to grind with common salt added. When the ground fish meat was fully thawed, calcium carbonate, starch and water were added, and full grind was performed. A vinylidene chloride casing having a folding diameter of 48 mm was filled with the ground fish meat after the grind, and the ground fish meat was left to stand in warm water at 30°C for 60 minutes and then boil-heated at 90°C for 30 minutes. The ground fish meat was rapidly cooled, then stored in a refrigerator at 10°C for one night and subsequently cut into 25-mm round slices.

The jelly strength of the obtained fish paste product was measured and evaluated as follows.

(Jelly strength)

The breaking load (g) and the recess value (cm) were measured when thrusting a cylindrical plunger having a diameter of 5 mm. A value obtained by multiplying the breaking load by the recess value is defined as jelly strength (g•cm). The jelly strength of a fish paste product in which the calcium carbonate was not blended (blank) was defined as 100. The rate of increase in the jelly strength of the fish paste product was calculated relative to the blank as follows.

```
The rate of increase in the jelly strength (%) = the

jelly strength of the fish paste product with calcium

carbonate blended × 100 / the jelly strength of the blank.
```

The evaluation results are shown in Tables 3 and 4.

[Table 3]

| Calcium carbonate | Comparative Example 1 | Example 2 | Example 1 | Example 3 | Comparative Example 2 |
|---|---|---|---|---|---|
| BET specific surface area ($m^2$/g) | 16 | 25 | 33 | 38 | 47 |
| Volume of voids having 0.1 $\mu$m or less (%) | 35 | 35 | 37 | 40 | 32 |
| Rate of increase in jelly strength (%) | 105 | 120 | 128 | 130 | 115 |

[Table 4]

| Calcium carbonate | Comparative Example 4 | Comparative Example 3 | Example 4 | Example 1 |
|---|---|---|---|---|
| BET specific surface area ($m^2$/g) | 25 | 30 | 30 | 33 |
| Volume of voids having 0.1 $\mu$m or less (%) | 18 | 25 | 32 | 37 |
| Rate of increase in jelly strength (%) | 110 | 115 | 123 | 125 |

As shown in Tables 3 and 4, the calcium carbonate preparations for food additives of Examples 1 to 4 according to the present invention exhibit high jelly strength when the calcium carbonate preparations were used for a fish paste product. Therefore, the calcium carbonate preparations for food additives of the present invention can impart good springiness when the calcium carbonate preparations were added to a fish paste product.

**Claims**

1.  Calcium carbonate having a BET specific surface area in the range of 20 to 45 m$^2$/g, and a volume of voids having a void size of 0.1 $\mu$m or less of 30% or more based on the whole volume of voids in a pore size distribution curve in a void size range from 0.01 to 10 $\mu$m by mercury porosimetry.

2.  A calcium carbonate preparation for food addition use, comprising: the calcium carbonate according to claim 1; and an emulsifier.

3.  The calcium carbonate preparation for food addition use according to claim 2, wherein the emulsifier is included in an amount of 1 to 60 parts by mass per 100 parts by mass of the calcium carbonate.

4.  The calcium carbonate preparation for food addition use according to claim 2 or 3, wherein the emulsifier is at least one selected from sucrose fatty acid esters, polyglycerin fatty acid esters, sodium carboxymethylcellulose, methylcellulose, propylene glycol alginate, water-soluble soybean polysaccharides, gum arabic, arabinogalactan, lecithin and modified starch.

5.  The calcium carbonate preparation for food addition use according to any one of claims 2 to 4, wherein the calcium carbonate preparation is obtained by drying an aqueous suspension comprising the calcium carbonate and the emulsifier.

6.  A food comprising: the calcium carbonate according to claim 1.

7.  The food according to claim 6, wherein the food is a milk beverage.

8.  The food according to claim 6, wherein the food is a fish paste product.

## INTERNATIONAL SEARCH REPORT

| International application No. |
| --- |
| PCT/JP2018/027450 |

**A. CLASSIFICATION OF SUBJECT MATTER**
Int.Cl. C01F11/18(2006.01)i, A23L2/38(2006.01)i, A23L2/52(2006.01)i,
A23L17/00(2016.01)i, A23L33/16(2016.01)i

According to International Patent Classification (IPC) or to both national classification and IPC

**B. FIELDS SEARCHED**

Minimum documentation searched (classification system followed by classification symbols)
Int.Cl. C01F11/18, A23L2/00-2/84, A23L17/00-17/60, A23L31/00-33/29

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
JSTPlus/JST7580/JSTChina (JDreamIII), CAplus/REGISTRY/FSTA (STN), DWPI (Derwent Innovation)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | EP 3069713 A1 (OMYA INTERNATIONAL AG) 21 September 2016, claims, table 1, fig. 2, paragraphs [0012], [0020], [0023]-[0024], [0056], [0064]-[0065], [0101] & JP 2018-510162 A & US 2018/0078506 A1 & WO 2016/150773 A1 & CN 107405308 A & KR 10-2017-0129232 A | 1-6<br>7-8 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 31 August 2018 (31.08.2018) | 18 September 2018 (18.09.2018) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/027450 |

**C (Continuation). DOCUMENTS CONSIDERED TO BE RELEVANT**

| Category* | Citation of document, with indication, where appropriate, of the relevant passages | Relevant to claim No. |
| --- | --- | --- |
| X<br>A | EP 2465903 A1 (OMYA DEVELOPMENT AG) 20 June 2012, example 7, fig. 1-2, claims, paragraphs [0028]-[0029] & JP 2014-507490 A & US 2013/0251921 A1 & WO 2012/080343 A1 & CN 103261334 A & KR 10-2013-0132921 A | 1<br>2-8 |
| A | JP 2002-235015 A (SHIRAISHI KOGYO KAISYA, LTD.) 23 August 2002, entire text & US 2002/0102404 A1, entire text | 1-8 |
| A | JP 2007-186408 A (OJI PAPER CO., LTD.) 26 July 2007, entire text (Family: none) | 1-8 |
| A | WO 2003/042103 A1 (MARUO CALCIUM CO., LTD.) 22 May 2003, entire text & JP 3650391 B2 & US 2004/0092639 A1 & EP 1457459 A1 & KR 10-2004-0044432 A & CN 1692076 A | 1-8 |
| A | JP 2015-168912 A (OKUTAMA KOGYO CO., LTD.) 28 September 2015, entire text (Family: none) | 1-8 |
| A | JOHNSON, M. L. et al., "Porous calcium carbonate as a carrier material to increase the dissolution rate of poorly soluble flavouring compounds", Food & Function, 28 February 2017, vol. 8, pp. 1627-1640 | 1-8 |
| A | YUE, L. et al., "Spherical porous framework of calcium carbonate prepared in the presence of precursor PS-PAA as template", Microporous and Mesoporous Materials, 23 December 2007, vol. 113, pp. 538-541 | 1-8 |

Form PCT/ISA/210 (continuation of second sheet) (January 2015)

**EP 3 659 969 A1**

**Patent documents cited in the description**

- JP 10528630 A

- JP 6220238 A